# EUROPEAN PATENT APPLICATION

(11) **EP 4 286 909 A1**
(43) Date of publication of application: **06.12.2023**
(21) Application number: 23176547.0
(22) Date of filing: 31.05.2023
(51) Int. Cl.: G02B 6/44

(54) **END CAP FOR A CABLE CLOSURE**

(30) Priority: 01.06.2022 US 202263347943 P
(71) Applicant: Corning Research & Development Corporation, Corning, New York 14831 (US)
(72) Inventor: Kluwe, Wolf Peter, 58119 Hagen (DE); Matthies, Jürgen, 58300 Nordrhein-Westfalen (DE); McKinney, Larry Todd, Keller 76248 (US); Müller, Thorsten, 58708 Menden (DE); Wilcox, Dayne, El Cerrito 94530 (US)
(74) Representative: Elkington and Fife LLP

(57) **Abstract**

An end cap for a telecommunications closure includes an end cap body having a central hub and a plurality of cutouts; a plurality of extensions extending from the central hub, wherein each of the plurality of extensions comprises a plurality of walls; and a plurality of mechanism positioning elements configured to house at least a portion of a compression mechanism, each mechanism positioning element having a base, at least one wall that extends from the base, and a compression mechanism opening, wherein the compression mechanism opening is configured to house at least a portion of the compression mechanism.

## Description

### RELATED APPLICATIONS

This application claims the benefit of priority of U.S. Provisional Application Serial No. 63/347943, filed on June 1, 2022, the content of which is relied upon and incorporated herein by reference in its entirety.

### BACKGROUND

The present disclosure generally relates to end caps and leveraging or compression mechanisms used to compress and activate seals on cable sealing segments, particularly for environmental protection (e.g. pressure and water tightness) of sealing systems and closures.

Telecommunications systems include various networks, subsystems and components that allow for the transmission of data and voice signals over long distances. Telecommunications cables and closures make up part of these networks and subsystems. Telecommunications cables include, but are not limited to fiber optic cables, copper cables, or combinations of copper and fiber optic cables (often referred to as hybrid cables). Telecommunications closures house and protect telecommunications components such as cables, splices, termination panels, power splitters and wavelength division multiplexers.

Telecommunications closures are typically sealed to protect components inside of the closure from environmental exposure. For example, telecommunications are designed to inhibit the intrusion of moisture, bugs, and other types of contaminants. While some types of sealing systems for telecommunications closures are effective, there is still a need for improvements in this area.

### SUMMARY

Disclosed herein are various embodiments of end caps, compression mechanisms, compression/lever mechanisms, sealing systems, sealing activation tools, and closures having such elements.

The compression/lever mechanisms disclosed herein are configured to activate individual cable seals on the end cap. Using these types of mechanisms are much more convenient, faster and error safe for the installer, compared to the common practice of a screwing mechanism. An end cap configured to seat individual cable entry segments allows for a better accessibility of each individual cable port such that other installed cable and active services are not disturbed.

The embodiments disclosed herein thus provide for simpler and quicker installation, by providing appropriate amount of compression forces with a defined end final position, which is actuated using, in part, a cam or biasing element. These configurations are also more suited to prevent operator mistakes which could cause closures to leak.

According to a first aspect of the disclosure, an end cap for a closure includes an end cap body having a central hub and a plurality of cutouts; a plurality of extensions extending from the central hub, wherein each of the plurality of extensions comprises a plurality of walls; and a plurality of mechanism positioning elements configured to house at least a portion of a compression mechanism, each mechanism positioning element having a base, at least one wall that extends from the base, and a compression mechanism opening, wherein the compression mechanism opening is configured to house at least a portion of the compression mechanism.

According to another aspect of the disclosure, a sealing system for a closure includes an end cap, comprising: an end cap body having a central hub and a plurality of cutouts; a plurality of extensions extending from the central hub, wherein each of the plurality of extensions comprises a plurality of walls; a plurality of mechanism positioning elements configured to house at least a portion of a compression mechanism, each mechanism positioning element having a base, at least one wall that extends from the base, and a compression mechanism opening; a compression mechanism, at least partially disposed in the end cap, the compression mechanism comprising: a housing, having a spring at least partially disposed within the housing, a compression element, coupled to the housing, an activation lever, coupled to the compression element, comprising an upper end and a lower end, the lower end including a biasing element, wherein the activation lever is coupled to the biasing element such that upon application of a compressive force to at least a portion of the activation lever, the compression element moves, allowing the activation lever to change from a non-actuated position to an actuated position, wherein in the actuated position, the activation lever is configured to couple with a spring and environmentally seal the telecommunications closure.

Additional aspects, features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate embodiments, and together with the description serve to explain principles and operation of the various embodiments.

### BRIEF DESCRIPTION OF THE DRAWINGS

FIG. 1 is an isometric top view of an end cap in accordance with embodiments disclosed herein;
FIG. 2 is an isometric bottom view of the end cap shown in FIG. 1 in accordance with embodiments disclosed herein;
FIG. 3 is a detailed view of a portion of the end cap shown in FIG. 2;
FIG. 4 is a top view of an end cap shown in FIG. 1 with installed cable entry and dummy/blind segments;
FIG. 5 is an isometric view of a compression mechanism in accordance with embodiments disclosed herein;
FIGs. 6, 7, and 8 are isometric and cross-sectional views of compression mechanisms in accordance with embodiments disclosed herein;
FIGs. 9 and 10 are isometric views of a portion of an end cap, including a compression mechanism in accordance with embodiments disclosed herein;
FIG. 11 schematically illustrates a method of using a compression mechanism in accordance with embodiments disclosed herein;
FIG. 12 is an isometric view of a compression mechanism in accordance with embodiments disclosed herein;
FIGs. 13A and 13B are isometric views of a compression mechanism in accordance with embodiments disclosed herein;
FIG. 14 illustrates an alternate mechanism for use in the compression mechanism shown in FIGs. 13A and 13B;
FIGs. 15-17 are cross-sectional side views of spring assemblies used in compression mechanisms in accordance with embodiments disclosed herein; and
FIG. 18 is a top isometric view of a spring feature included in compression mechanisms in accordance with embodiments disclosed herein.

The figures are not necessarily to scale. Like numbers used in the figures may be used to refer to like components. However, it will be understood that the use of a number to refer to a component in a given figure is not intended to limit the component in another figure labeled with the same number.

### DETAILED DESCRIPTION

Various exemplary embodiments of the disclosure will now be described with particular reference to the drawings. Exemplary embodiments of the present disclosure may take on various modifications and alterations without departing from the spirit and scope of the disclosure. Accordingly, it is to be understood that the embodiments of the present disclosure are not to be limited to the following described exemplary embodiments, but are to be controlled by the features and limitations set forth in the claims and any equivalents thereof.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

Spatially related terms, including but not limited to, "lower," "upper," "beneath," "below," "above," and "on top," if used herein, are utilized for ease of description to describe spatial relationships of an element(s) to another. Such spatially related terms encompass different orientations of the device in use or operation in addition to the particular orientations depicted in the figures and described herein. For example, if an object depicted in the figures is turned over or flipped over, portions previously described as below or beneath other elements would then be above those other elements.

Cartesian coordinates are used in some of the Figures for reference and are not intended to be limiting as to direction or orientation.

For purposes of description herein, the terms "upper," "lower," "right," "left," "rear," "front," "vertical," "horizontal," "top," "bottom," "side," and derivatives thereof, shall relate to the disclosure as oriented with respect to the Cartesian coordinates in the corresponding Figure, unless stated otherwise. However, it is to be understood that the disclosure may assume various alternative orientations, except where expressly specified to the contrary.

For the purposes of describing and defining the subject matter of the disclosure it is noted that the terms "substantially" and "generally" may be utilized herein to represent the inherent degree of uncertainty that may be attributed to any quantitative comparison, value, measurement, or other representation.

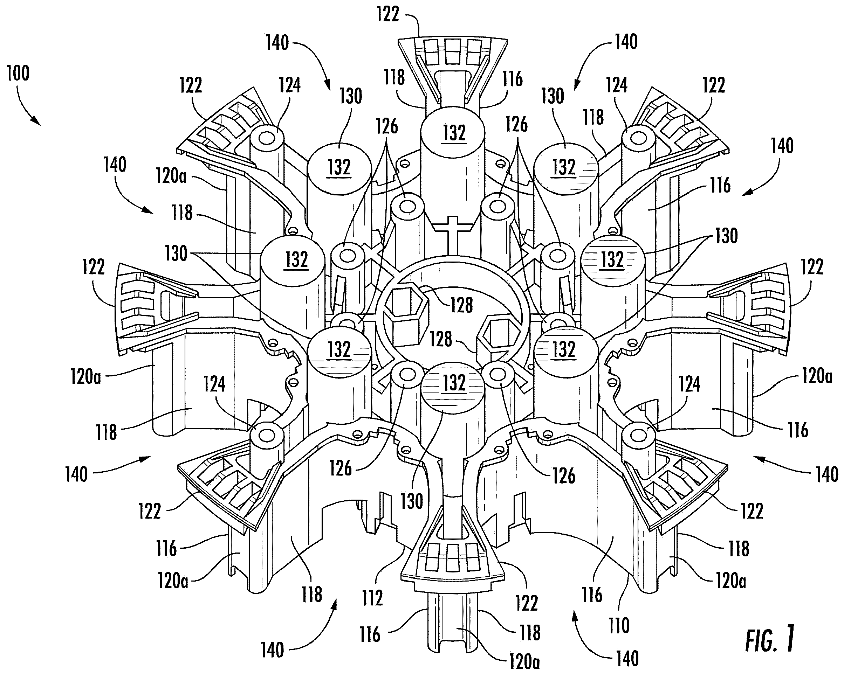

FIGs. 1, 2 and 3 illustrate top and bottom views of an embodiment of an end cap 100 for a cable closure (not shown). The end cap 100 includes an end cap body 110 having a central hub 112, and a plurality of extensions 114 that extend from the central hub. This embodiment of the end cap shows eight extensions, however, fewer or additional extensions may be included, depending on application requirements.

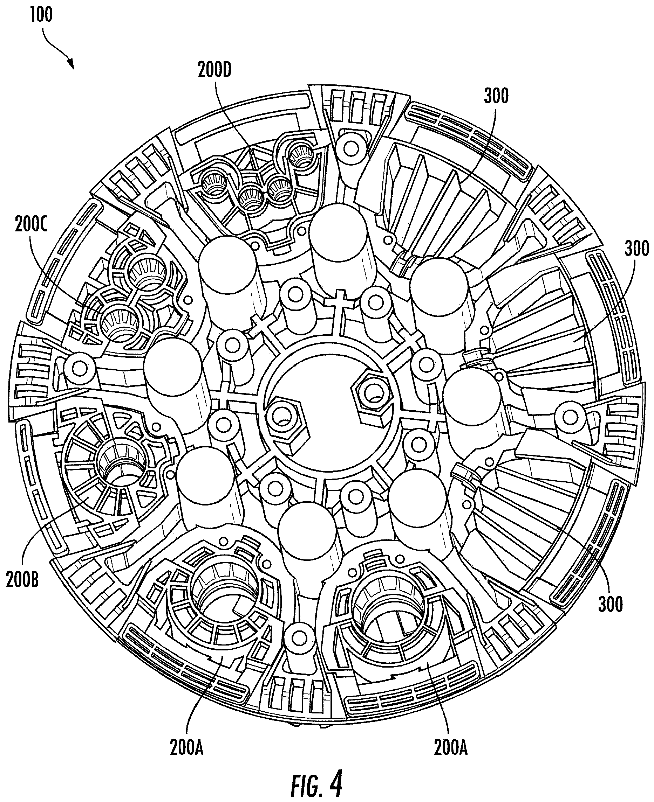

Each extension 114 includes a plurality of walls, having extension sidewalls 116, 118, an extension front wall 120a, and an extension rear wall 120b. Each extension 114 additionally includes a segment positioning element 122 that abuts cable entry segments or dummy/blind segments upon assembly with the end cap (see FIG. 4). Disposed between at least some of the walls and preferably the sidewalls 116, 118 are outer connector mounts 124. Inner connector mounts 126 are also contained within the central hub 112. Each connector mount 124, 126 acts as a screwing point and allows for insertion of various types of connector elements, including mounting brackets, connectors, strain relief elements, etc. into the respective connector mount.

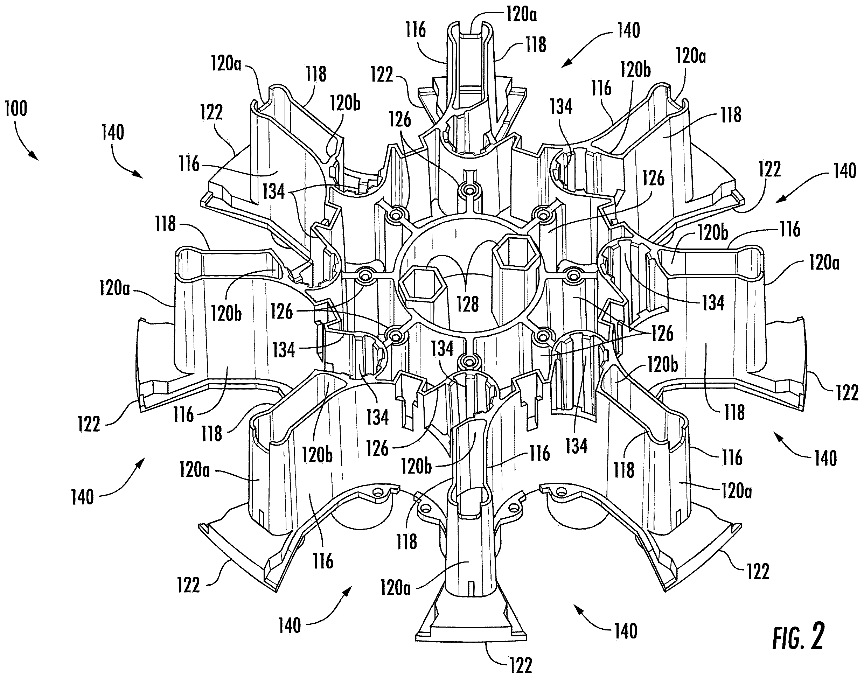

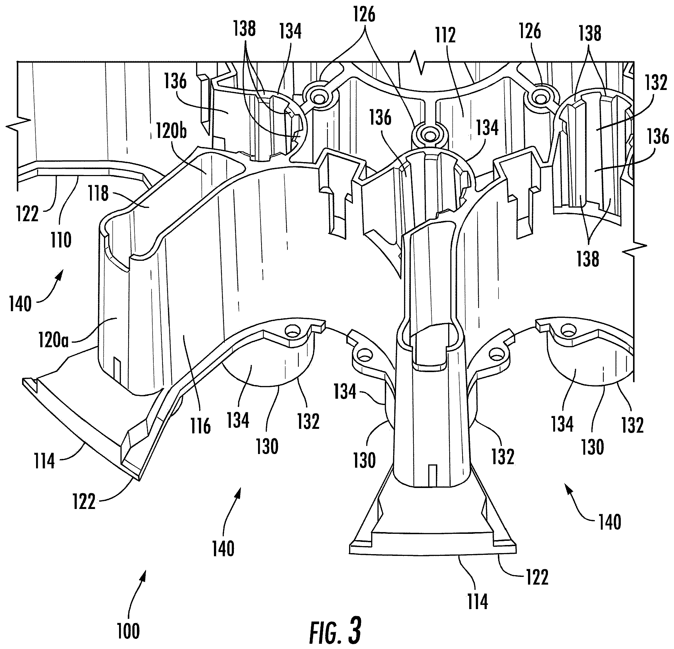

The end cap 100 additionally includes a plurality of ground openings 128 disposed within the central hub 112 for mounting of grounding elements (not shown) and a plurality of mechanism positioning elements 130 configured to house at least a portion of a compression mechanism, as will be further described. Each mechanism positioning element 130 has a base 132 and at least one wall 134 that extends from the base. The at least one wall 134 extends at a predetermined height to form a compression mechanism opening 136, as particularly shown in FIGs. 2 and 3. Each mechanism positioning element 130 also preferably includes a plurality of ribs 138 contained therein, as particularly shown in FIG. 3. FIGs. 1 and 2 show the end cap 100 having eight (8) openings/cut-outs 140 for individual cable entry segments (not shown) or dummy or blind segments. Fewer or additional openings can be included in the end caps, depending on application requirements and the desired amount of cable entry segments.

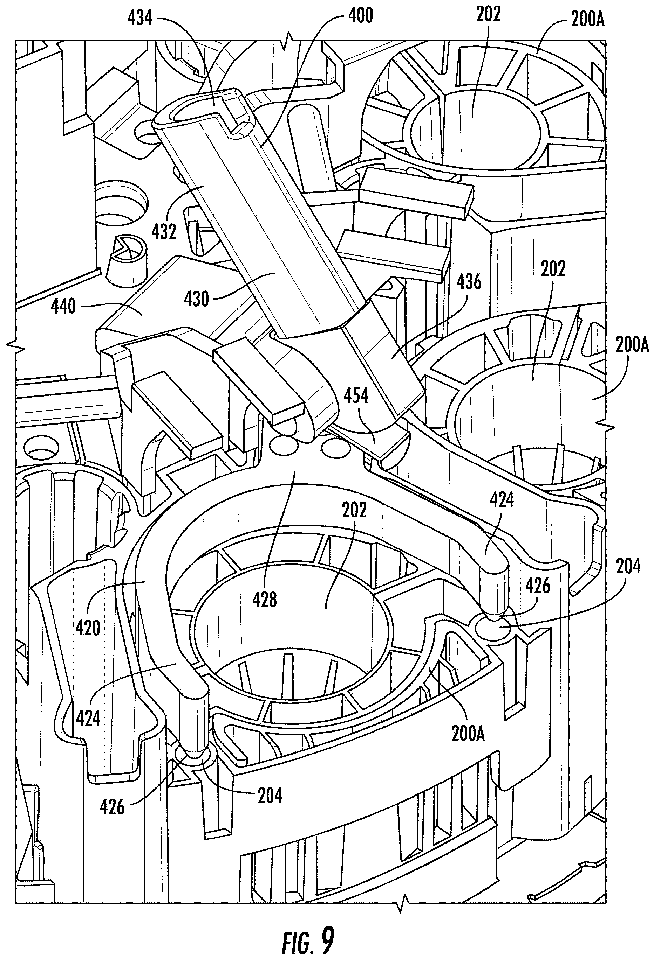

FIG. 4 shows the end cap 100 with various configurations of cable entry segments 200A, 200B, 200C, 200D and a plurality of blind segments 300 installed. The cable entry segments and the dummy/blind segments are positioned between two extensions 114. The cable entry segments are available in various embodiments, differing by number of cables to be installed (1, 2, 4, etc.). Accordingly, the cable entry segments can accommodate a different number of cables which are fewer or more than the openings shown in FIG. 4. Each cable entry segment thus includes a plurality of cable entry openings 202 and preferably a plurality of positioning apertures 204 (FIG. 9), the latter of which facilitate positioning of the cable entry segment using a compression mechanism in accordance with embodiments disclosed herein.

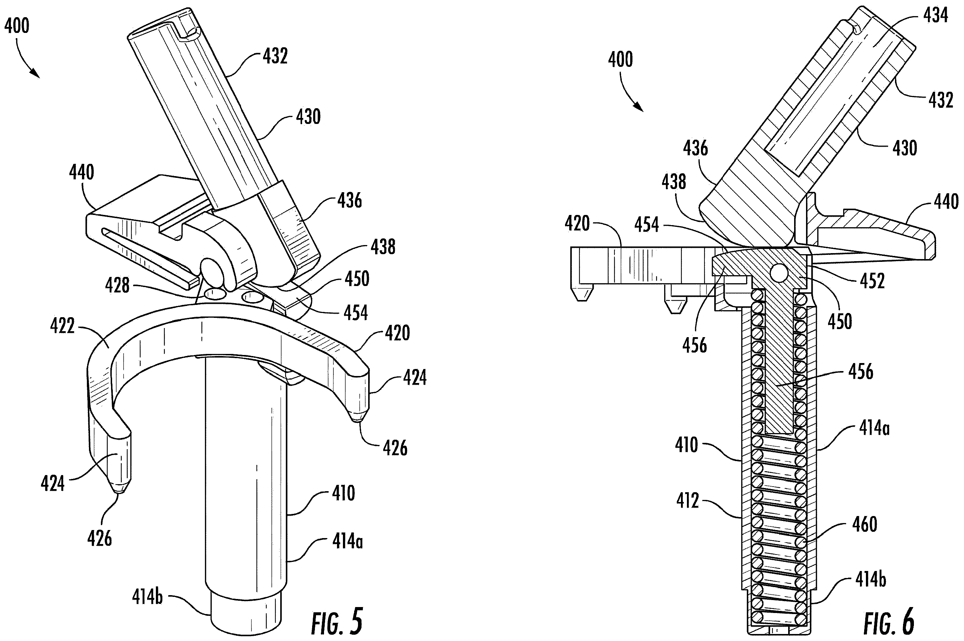

FIGs. 5-8 illustrate an embodiment of a compression mechanism 400 used to install cable entry segments into an end cap for a cable closure. FIG. 9 illustrates how the compression mechanism 400 is positioned into the end cap 100 for installation of one type of cable entry segment 200A. The compression mechanism 400 includes a housing 410, a leveraging or compression element 420, an activation lever 430 and a mounting snap feature 440. FIG. 6 shows the interior components of the leveraging or compression mechanism 400, including a piston element 450, and a spring 460 coupled to the piston element and at least partially disposed within the housing 410. The housing 410 has a hollow body 412 with a stepped wall 414, including a lower wall section 414b and an upper wall section 414a. The upper wall section 414a couples with the leveraging or compression element 420 such that a portion of the leveraging or compression element 420 sits atop the upper wall section 414a of the housing 410.

The leveraging or compression element 420 preferably has a c- or horseshoeshaped profile complementary to the shape of the cable entry segment or dummy/blind segment and/or the cutouts formed in the endcap, such that the compression element abuts against the end cap, as particularly shown in FIG. 9. Other shapes and profiles are contemplated, depending on the shape of the cable entry segment and/or the end cap. The leveraging or compression element 420 preferably includes a curved body 422, having ends 424 with pointed elements 426 and a portion 428 that couples with and which preferably connects to the piston element 450.

The activation lever 430 includes a handle or an upper bored end 432 having an opening 434 contained therein. The opening 434 is configured for insertion of an activation tool (not shown), e.g. a screwdriver. The activation lever 430 also include a lower end 436 having a rounded cam or biasing element 438 with curvature.

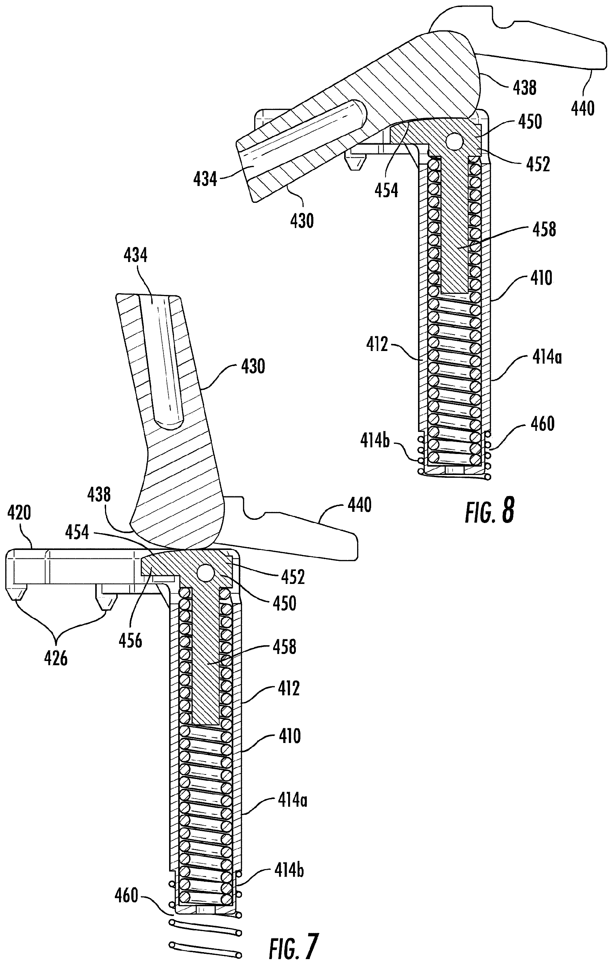

FIGs. 7-10 illustrate the leveraging or compression mechanism in various states of compression and uncompression. Referring particularly to FIGs. 7 and 8, the cam or biasing element 438 is configured to move with respect to a complementary surface of the piston element 450. The piston element 450 includes an upper piston section 452 having a curved surface 454 with an overhang portion 456, and a lower piston section 458 configured for insertion of a spring 460. The activation lever 430 with the cam or biasing element 438 is shown compressing the spring 460 inside via the inserted piston element 450 during activation. The spring 460 transmits the compression force to the housing 410 with the leveraging or compression element 420.

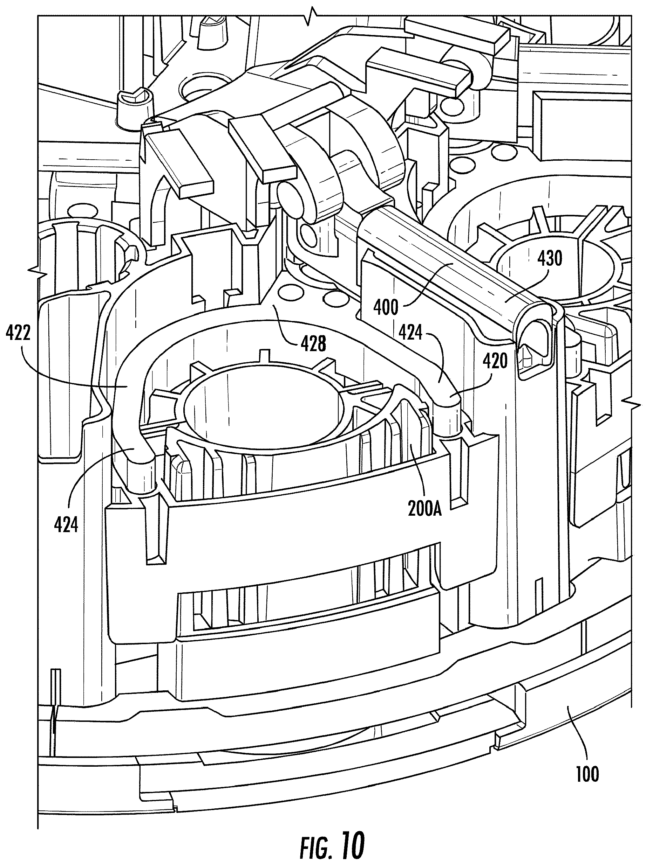

In FIGs. 9 and 10, the leveraging or compression mechanism 400 is positioned within the leveraging or compression mechanism opening 136 and the leveraging or compression element 420 is shown compressing the cable entry segment 200A so that the cable entry segment seals with the end cap, thereby a sealing function is ensured. The spring 460 is configured such that the leveraging or compression mechanism can activate sealing for different cable diameters and compensate to allow for volume changes for different sealing materials (e.g. gels) that may be used in final assembly. For example, some types of sealing materials will increase or decrease their volume at different temperatures.

The spring 460 at the bottom of the housing 410, as shown particularly in FIG. 7, actuates the piston element, moving it to an initial position when the activation lever is set back to its starting position. FIG. 9 shows a part of the end cap with a cable entry segment and the leveraging or compression mechanism installed in an open position. FIG. 10 shows the end cap with a cable entry segment and an activated cable seal adjacent to the leveraging or compression mechanism. Here, the leveraging or compression mechanism 400 is substantially locked in a final position. The pointed elements serve as a fixing feature on the horseshoe profile to engage with cable entry segment and hold it in place, preventing of outward movement due to the applied compression force during sealing.

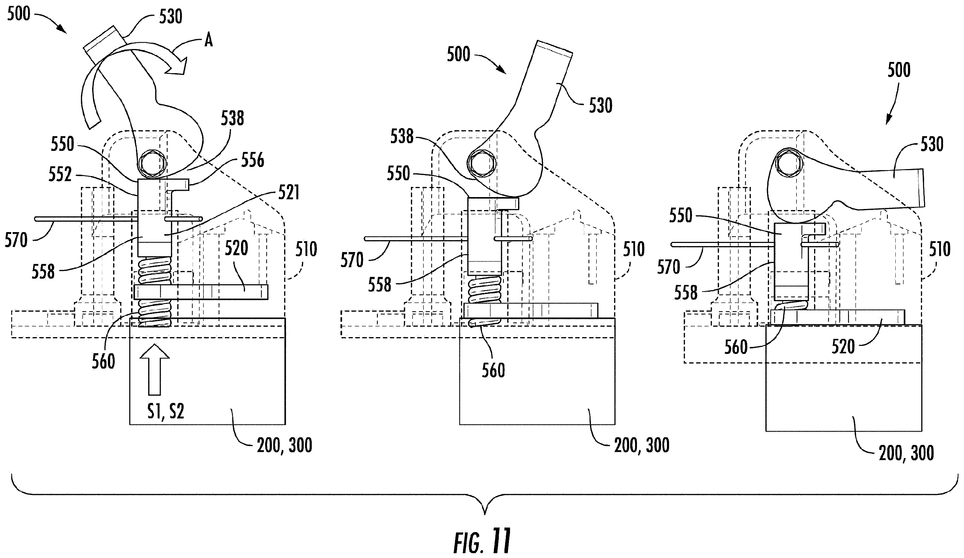

FIG. 11 schematically illustrates how a leveraging or compression mechanism 500, using two types of springs S1, S2 with different spring constants and characteristics can work in concert while the leveraging or compression mechanism is in various states of compression/uncompression. The leveraging or compression mechanism 500 includes a housing 510, a leveraging or compression element 520, having a slot 521 for positioning of a guide pin 570, a piston element 450, and an activation lever 530. The guide pin 570 moves relative to the movement of the activation lever 530 with the guide pin being at the bottom of the slot 521 after the initial activation and the guide pin 570 being at the top of the slot 521 at the final activation. The housing 510 has a hollow body 512 with a stepped wall 514. The leveraging or compression element 520 preferably has a c- or horseshoe- shaped profile that is complementary to the shape of the cable entry segment 200. The leveraging or compression element 520 preferably includes a curved body that couples with and connects to the piston element 550.

The activation lever 530 includes a handle or an upper end 532 and a cam or biasing element 538 configured to move (indicated by arrow A) with respect to a complementary surface of the piston element 550. The piston element 550 includes an upper piston section 552 having a upper surface 554 with an overhang portion 556, and a lower piston section 558 configured for insertion of a plurality of springs 560 (preferably two springs) having different spring constants S1 (lesser spring constant), S2 (higher spring constant). The activation lever 530 with the cam or biasing element 538 compresses the one or more springs 560 via the inserted piston element 550 during activation. The spring 560 transmits the compression force to the housing 510 with the leveraging or compression element 520.

A lesser spring force S1 could keep the piston element elevated to the top, and the leveraging or compression element in a raised position. Thus use of a spring with a lesser spring force allows for attaching dummy or cable entry segments under a portion of the leveraging or compression element 520. The initial rotation of the activation lever 530 can lower the leveraging or compression element 520 to the top of a dummy segment or a cable entry segment. Further rotation of the activation lever 530 moves the cam or biasing element 538 downwardly toward the piston element 550 and the leveraging or compression element 520. A heavier compression spring could apply a substantially constant compression to a dummy segment or a cable entry segment. In this instance, the substantially constant compressive force can be maintained thru various temperature changes or cycles, particularly where gel sealing is used as a sealing element.

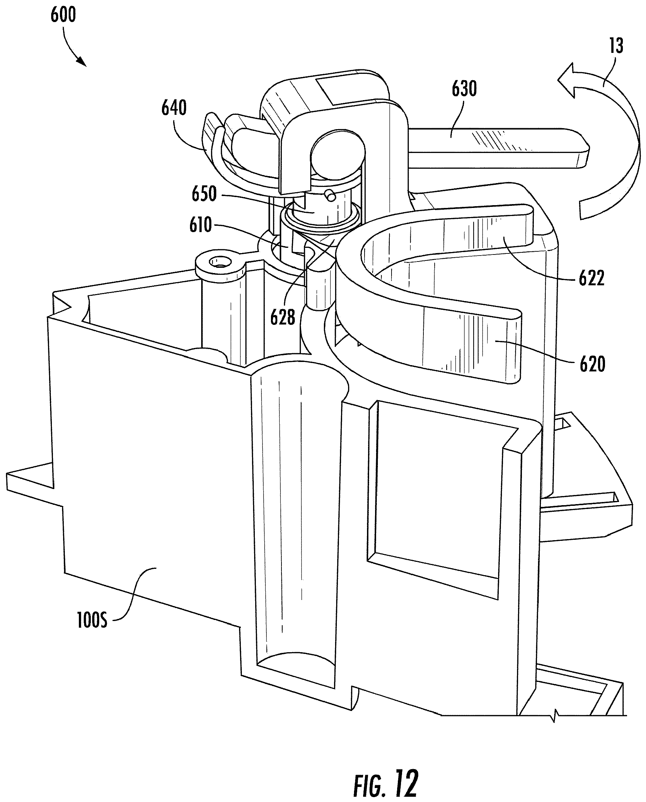

FIG. 12 illustrates an embodiment of a leveraging or compression mechanism 600 having cam or biasing element with follower geometry, partially inserted into a segment of an end cap 100S. Multiple segments can be integrally connected to form a end cap similar to the configuration shown in FIG. 1. This configuration of the leveraging or compression mechanism 600 also negates the need for a spring having a smaller spring constant. The leveraging or compression mechanism 600 includes a housing 610, a leveraging or compression element 620, an activation lever 630 that rotates (indicated by arrow B) and a cam or biasing feature 640. The leveraging or compression mechanism 600 additionally includes a piston element 650 disposed within the housing 610.

The leveraging or compression element 620 preferably has a c- or horseshoeshaped profile that is complementary to the shape of a cutout portion of the end cap segment or a cable entry segment that is being installed into the end cap. Other shapes and profiles, however, are contemplated. The leveraging or compression element 620 preferably includes a curved body 622 and a portion 628 that couples with the piston element 650.

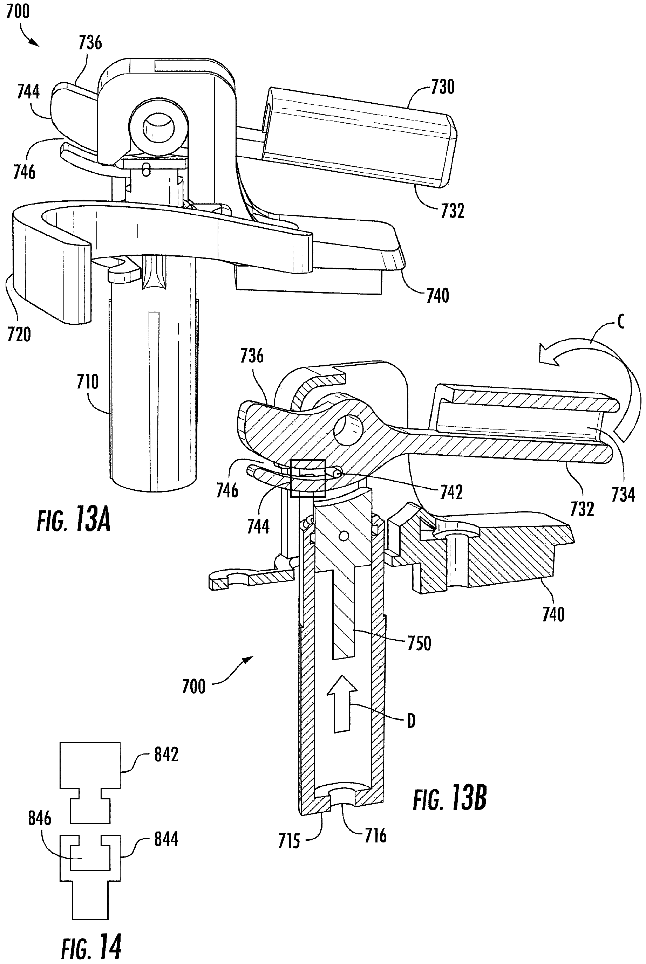

FIGs. 13A and 13B illustrate another embodiment of a leveraging or compression mechanism 700 in accordance with embodiments disclosed herein. The leveraging or compression mechanism 700 includes a housing 710, a leveraging or compression element 720, an activation lever 730, and a mounting feature 740 with a guide pin 742. FIG. 13B is a partial cross-sectional view, showing the interior components of the leveraging or compression mechanism 700, including a plunger element 750. The plunger element 750 is configured to couple to a spring (not shown) for positioning within the housing 710 and move upward, as indicated by arrow D. The housing 710 has a hollow body 712 with a wall 714, including a bored end 715 with a hole 716.

The activation lever 730 includes a handle or an upper bored end 732 having an opening 734 contained therein. The opening 734 is configured for insertion of an activation tool (not shown), e.g. a screwdriver. The activation lever 730 also includes a lower end 736 having a slotted and curved cam or biasing element 744 with curved profile and a slot 746.

FIG. 14 illustrates an alternate geometry for the leveraging or compression mechanism that could replace the cam or biasing follower and pin geometry shown in FIGs. 13A and 13B. The alternate geometry would include a leader 842 with an outer profile 843 that complements the slot 846 and specifically the inner profile 845 of the follower 844. Accordingly, upon activation of a lever the leader 842 when assembled with the follower 844 would move.

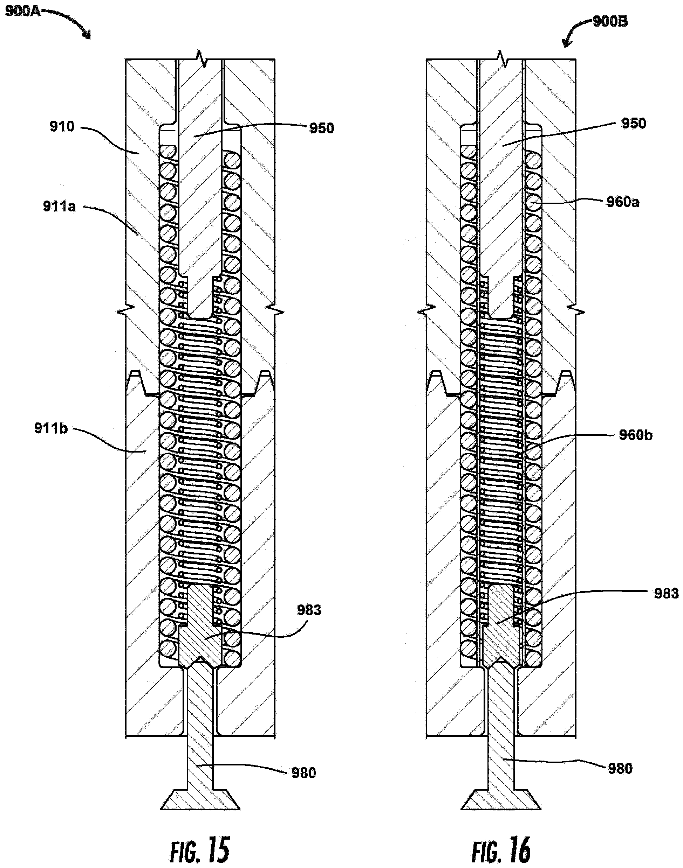

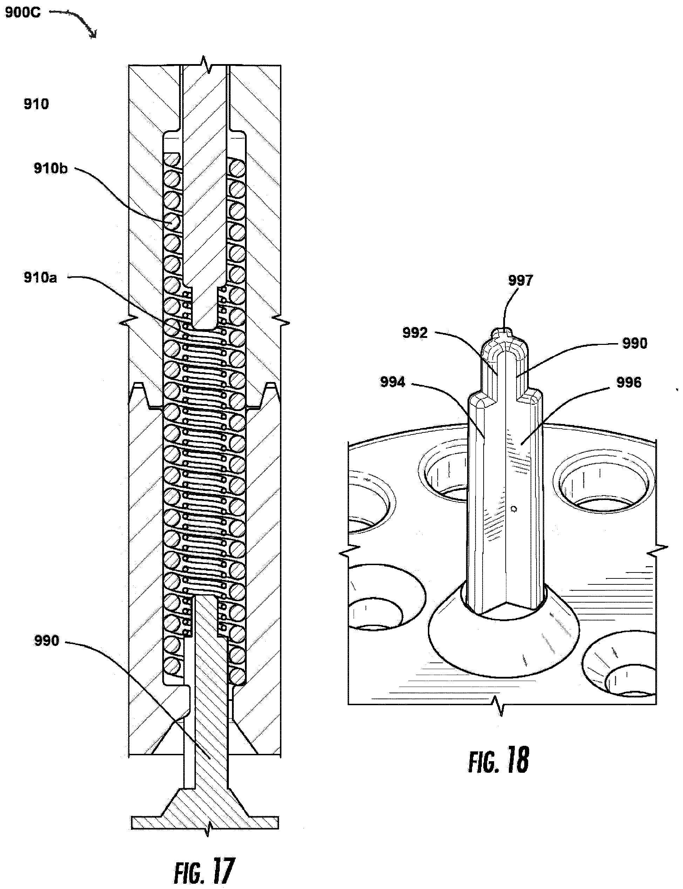

FIGs. 15, 16, and 17 illustrate additional configurations for components of the leveraging or compression mechanisms disclosed herein, detailing concentric/nested assemblies 900A, 900B, 900C that include a hollowed out housing 910 with upper and lower sections 911a, 911b, a plunger element 950, a spring 960a that conceals the lighter ejection/lifting spring within the length of a heavier compression spring 960b, an ejection pin 980, and a spring carrier 983. This dual spring configuration is capable of saving space and protecting the ejection mechanism from loss or damage. An alternate embodiment shown in FIG. 16 also includes a spring separation sleeve 985 that provides further protection of the springs 960a, 960b and spring carrier 983. FIGs. 17 and 18 details an example of how an alternate ejection pin 990 could be implemented, with a centering element 992, having a nub 997, and shoulder supports 994, 996 configured to push directly on the ejection spring 960a.

It will be apparent to those skilled in the art that various modifications and variations can be made without departing from the spirit or scope of the disclosure. sSince modifications, combinations, sub-combinations and variations of the disclosed embodiments incorporating the spirit and substance of the disclosure may occur to persons skilled in the art, the embodiments disclosed herein should be construed to include everything within the scope of the appended claims and their equivalents.

Aspects of the invention are set out below:
Aspect 1. An end cap for a cable closure, comprising:
   an end cap body having a central hub and a plurality of cutouts;
   a plurality of extensions extending from the central hub, wherein each of the plurality of extensions comprises a plurality of walls; and
   a plurality of mechanism positioning elements configured to house at least a portion of a compression mechanism, each mechanism positioning element having a base, at least one wall that extends from the base, and a compression mechanism opening,
   wherein the compression mechanism opening is configured to house at least a portion of the compression mechanism.
Aspect 2. The end cap of aspect 1, further comprising a plurality of ground openings disposed within the central hub for mounting of grounding elements.
Aspect 3. The end cap of aspect 1 or aspect 2, wherein each compression mechanism opening further comprises a plurality of ribs.
Aspect 4. The end cap of any one of aspects 1-3, wherein each mechanism positioning element comprises a plurality of walls.
Aspect 5. The end cap of any one of aspects 1-4, wherein the plurality of walls comprises extension sidewalls, an extension front wall coupled to the extension sidewalls, and an extension rear wall coupled to the extension sidewalls.
Aspect 6. The end cap of aspect 5, wherein at least one outer connector mount is disposed between at least some of the extension sidewalls.
Aspect 7. The end cap of any one of aspects 1-6, wherein at least one inner connector mount is contained with the central hub.
Aspect 8. The end cap of any one of aspects 1-7, further comprising at least one cable entry segment positioned between two extensions, wherein the at least one cable entry segment includes at least one cable entry opening.
Aspect 9. The end cap of any one of aspects 1-8, further comprising at least one blind/dummy segment positioned between two extensions.
Aspect 10. A sealing system for a cable closure, comprising:
   an end cap, comprising:
   an end cap body having a central hub and a plurality of cutouts;
   a plurality of extensions extending from the central hub, wherein each of the plurality of extensions comprises a plurality of walls;
   a plurality of mechanism positioning elements configured to house at least a portion of a compression mechanism, each mechanism positioning element having a base, at least one wall that extends from the base, and a compression mechanism opening;
   wherein the compression mechanism is at least partially disposed in the end cap and comprises:
      a housing, having a spring at least partially disposed within the housing,
      a compression element, coupled to the housing, and
         an activation lever, coupled to the compression element, comprising an upper end and a lower end, the lower end including a biasing element,
      wherein the activation lever is coupled to the biasing element such that upon application of a compressive force to at least a portion of the activation lever, the compression element moves, allowing the activation lever to change from a non-actuated position to an actuated position, wherein in the actuated position, the activation lever is configured to couple with the spring and environmentally a cable entry sealing segment of the cable closure.
Aspect 11. The sealing system of any one of aspects 1-10, wherein the end cap further comprises a plurality of ground openings disposed within the central hub for mounting of grounding elements.
Aspect 12. The sealing system of any one of aspects 1-11, wherein each compression mechanism further comprises a mounting snap feature.
Aspect 13. The sealing system of any one of aspects 1-12, wherein each mechanism positioning element comprises a plurality of walls.
Aspect 14. The sealing system of any one of aspects 1-13, wherein the plurality of walls comprises extension sidewalls, an extension front wall coupled to the extension sidewalls, and an extension rear wall coupled to the extension sidewalls.
Aspect 15. The sealing system of any one of aspects 1-14, wherein at least one outer connector mount is disposed between at least some of the extension sidewalls.

## Claims

1. An end cap for a cable closure, comprising:
an end cap body having a central hub and a plurality of cutouts;
a plurality of extensions extending from the central hub, wherein each of the plurality of extensions comprises a plurality of walls; and
a plurality of mechanism positioning elements configured to house at least a portion of a compression mechanism, each mechanism positioning element having a base, at least one wall that extends from the base, and a compression mechanism opening,
wherein the compression mechanism opening is configured to house at least a portion of the compression mechanism.

2. The end cap of claim 1, further comprising a plurality of ground openings disposed within the central hub for mounting of grounding elements.

3. The end cap of claim 1 or claim 2, wherein each compression mechanism opening further comprises a plurality of ribs.

4. The end cap of any one of claims 1-3, wherein each mechanism positioning element comprises a plurality of walls.

5. The end cap of any one of claims 1-4, wherein the plurality of walls comprises extension sidewalls, an extension front wall coupled to the extension sidewalls, and an extension rear wall coupled to the extension sidewalls.

6. The end cap of claim 5, wherein at least one outer connector mount is disposed between at least some of the extension sidewalls.

7. The end cap of any one of claims 1-6, wherein at least one inner connector mount is contained with the central hub.

8. The end cap of any one of claims 1-7, further comprising at least one cable entry segment positioned between two extensions, wherein the at least one cable entry segment includes at least one cable entry opening.

9. The end cap of any one of claims 1-8, further comprising at least one blind/dummy segment positioned between two extensions.

10. A sealing system for a cable closure, comprising:
an end cap, comprising:
an end cap body having a central hub and a plurality of cutouts;
a plurality of extensions extending from the central hub, wherein each of the plurality of extensions comprises a plurality of walls;
a plurality of mechanism positioning elements configured to house at least a portion of a compression mechanism, each mechanism positioning element having a base, at least one wall that extends from the base, and a compression mechanism opening;
wherein the compression mechanism is at least partially disposed in the end cap and comprises:
a housing, having a spring at least partially disposed within the housing,
a compression element, coupled to the housing, and
an activation lever, coupled to the compression element, comprising an upper end and a lower end, the lower end including a biasing element,
wherein the activation lever is coupled to the biasing element such that upon application of a compressive force to at least a portion of the activation lever, the compression element moves, allowing the activation lever to change from a non-actuated position to an actuated position, wherein in the actuated position, the activation lever is configured to couple with the spring and environmentally a cable entry sealing segment of the cable closure.

11. The sealing system of claim 10, wherein the end cap further comprises a plurality of ground openings disposed within the central hub for mounting of grounding elements.

12. The sealing system of any one of claims 10-11, wherein each compression mechanism further comprises a mounting snap feature.

13. The sealing system of any one of claims 10-12, wherein each mechanism positioning element comprises a plurality of walls.

14. The sealing system of any one of claims 10-13, wherein the plurality of walls comprises extension sidewalls, an extension front wall coupled to the extension sidewalls, and an extension rear wall coupled to the extension sidewalls.

15. The sealing system of any one of claims 10-14, wherein at least one outer connector mount is disposed between at least some of the extension sidewalls.
